# EUROPEAN PATENT SPECIFICATION

(11) **EP 0 551 063 B1**
(45) Date of publication and mention of the grant of the patent: **25.09.1996**
(21) Application number: 92870004.6
(22) Date of filing: 07.01.1992
(51) Int. Cl.: C09D 163/00, C08G 59/22, C09D 5/08, C08G 59/40

(54) **Use of protective coating compositions for underbody coatings**
Verwendung von Schutzüberzugzusammensetzungen für Unterboden-Beschichtungen
Utilisation de compositions de peinture protectrice pour des revêtements dessous de caisse

(43) Date of publication of application: 14.07.1993
(73) Proprietor: FINA RESEARCH S.A., B-7181 Feluy (BE)
(72) Inventor: Belladone, Michel, B-1800 Vilvoorde (BE); Braeken, Josef, B-9470 Denderleeuw (BE)

(56) References cited:
- EP-A- 0 024 526
- EP-A- 0 284 564
- EP-A- 0 443 812
- DE-A- 2 657 969
- US-A- 3 635 875
- US-A- 4 751 129
- PATENT ABSTRACTS OF JAPAN vol. 8, no. 114 (C-225)(1551) 26 May 1984

## Description

The present invention relates to compositions of protective underbody coatings for use in the automotive industry. More particularly, the present invention relates to coating compositions giving coatings having anti-corrosive, anti-abrasive and sound deadening properties and which are used in the automotive industry.

Coating compositions find a wide field of applications in the automotive industry, especially for coating surfaces underneath automobiles which are subjected to rough contact with materials such as gravel, sand and dust. These coatings are called underbody coatings.

Many underbody coatings having anti-corrosive, anti-abrasive and sound deadening properties are well known in the prior art. These prior art compositions consist of plastisols generally comprising pulverulent polyvinyl-chloride (PVC) dispersed in a compatible liquid plasticizer to form a paste.

However, several serious problems occur in the production and use of PVC-plastisols. One of these problems is the toxic decomposition of the paint when the surfaces previously coated with PVC-plastisols are recycled. Since the production of recycled cars is an objective of the cars manufacturers, it would be very useful to find an underbody coating which is not subjected to such toxic decomposition during recycling. Furthermore the production of PVC itself represents a problem because persons working in the production area may be exposed to a health risk by the vinyl chloride.

JP-A-5927976 discloses structural adhesive compositions for use in assembly of automobile bodies, consisting of epoxy resins, hardeners and iron-based powder.
DE-A-2657969 discloses the use of epoxy resins in coating compositions for underbody coating, to be applied with a brush or, after dilution with a solvent, by spraying.

When using PVC-plastisols in protective coatings, it is disadvantageous that PVC is both sensitive to light and heat and tends to split off hydrogen chloride. The splitting off of hydrogen chloride represents a particularly serious problem because during use the plastisol must be heated to an elevated temperature, and any hydrogen chloride liberated under these conditions has a corrosive effect and, for example, corrodes metal substrates. The above-indicated problems are further exacerbated in that in certain special cases PVC-plastisols require relatively high baking temperatures in order to obtain very short gelling times so that the danger of PVC-decomposition is further increased.

An object of the present invention is to provide coating compositions for use as underbody coatings, which have excellent processing and product characteristics and which are PVC-free.

A further object of the present invention is to provide coatings for underneath automobile surfaces having good resistance to widely varying temperatures, good adhesion and age stability.

A further object of the present invention is to provide new and improved underbody coating compositions which may be easily applied by conventional spraying systems.

According to the present invention the sprayable coating compositions are used for coating surfaces underneath automobiles and comprise a solid hardener in the form of a powder, one or more fillers and/or pigments and one or more diepoxide resins, said hardener essentially not reacting with the diepoxide resins during storage of the paint at ambient temperature.

As used herein, diepoxide resin means a solventless epoxy resin having essentially two epoxy groups per molecule.

The solid hardener used in the composition according to the present invention is in the form of a powder which does essentially not react with the diepoxide resin during storage at ambient temperature. It is known that essentially no reaction occurs between the hardener and the diepoxide resin at ambient temperature when the final paint viscosity is stable. The man in the art knows that it can be tested by measuring the viscosity of the paint after 30 days at 40°C which may not increase more than 10% of the initial viscosity. The solid hardener reacts with the diepoxide resin at a temperature preferably comprised between 110°C and 160°C and is preferably characterised by a particle size distribution such that at least 90% of the particles have a size below 100 um. The hardener is preferably present in an amount comprised between 2% by weight and 10% by weight of the paint composition and is preferably chosen among the accelerated or substituted dicyandiamide type hardeners.

According to the present invention, the sprayable coating composition for coating surfaces underneath automobiles comprises one or more solventless diepoxide resins consisting essentially of at least one liquid aliphatic diepoxide resin and comprising optionally :
(i) at least one dissolved or dispersed solid aromatic diepoxide resin and/or
(ii) at least one liquid aromatic diepoxide resin which may be elastomer-modified.

The solventless liquid aliphatic diepoxide resin according to the present invention is preferably characterised by an EGC (epoxy group content) comprised between 2500 and 3700 mmole/kg. More preferably it has an EGC comprised between 2800 and 3400 mmole/kg.

The solid aromatic diepoxide resin (i) is preferably present in an amount up to 65% by weight of the total diepoxide resin. The solid aromatic diepoxide resin according to the present invention is preferentially based on a polyhydric phenol which is preferentially bisphenol acetone and is preferably characterised by an EGC (epoxy group content) comprised between 250 and 2200 mmole/kg. More preferably it is present in an amount up to 50% by weight of the total diepoxide resin and it has an EGC comprised between 800 and 1500 mmole/kg.

`When present, the liquid aromatic diepoxide resin which may be elastomer-modified (ii) is preferably used in an amount up to 50% by weight based on the total diepoxide resin. The liquid aromatic diepoxide resin preferably has an EGC comprised between 5000 and 5900 mmole/kg.

The elastomer modifying resin preferably is a carboxy terminated polybutadiene, a carboxy-terminated acrylonitrile-butadiene copolymer, a carboxy-terminated polyester resin or a fatty acid dimeric resin and is preferably used when present, in an amount up to 35% by weight of the elastomer-modified liquid aromatic diepoxide resin. The preferred elastomer modifying resin is a dimeric fatty acid characterised by an acid number comprised between 185 and 205 mg KOH/g. The resulting elastomer-modified liquid aromatic diepoxide resin preferably has an EGC comprised between 2800 and 5800 mmole/kg.

In a most preferred embodiment of the present invention, the sprayable coating composition for coating surfaces underneath automobiles preferably comprises a mixture of diepoxide resins consisting essentially of :
- at least one solid aromatic diepoxide resin dissolved or dispersed in
- at least one liquid aliphatic diepoxide resin and comprising optionally
- at least one liquid aromatic diepoxide resin which may be elastomer-modified.

It is known in the art of underbody coatings that, in order to be suitable, the paint is characterised at the same time by a sufficiently high viscosity that the paint is in the form of a stable pasty and homogeneous product prior to being applied and once applied and by a sufficiently low viscosity that it may easily be applied by pulverisation and particularly according to an airless spray system when the paint is subjected to high shear forces. In order to combine these viscosity properties the paint generally contains a thixotropic agent usually in an amount of 0,3 to 3% by weight. After being applied by pulverisation, the composition of the invention is in the form of an underbody coating having a high viscosity, which firmly adheres to the substrate and which does not sag.

The thixotropic agents are preferably amorphous silicon dioxide. One can also use colloidal silica and particularly silica gels which are readily available or which are easily prepared by acidifying solutions of soluble silicates with formation of a hydrosol or of a gelatinous precipitate, the reaction products of bentonite with an amine, such as for example the products obtained by reacting a heterocyclic tertiary amine with a derivative of attapulgite, salts of monocarboxylic acids and of alkali or alkaline-earth metals, such as sodium, potassium, lithium, calcium, barium and strontium salts of fatty acids, for instance caprylic acid, lauric acid, myristic acid, palmitic acid, stearic acid, oleic acid, ricinolic acid, linolenic acid, linoleic acid.

The composition according to the present invention may also contain up to 15% by weight of a plasticizer which is completely compatible with the diepoxide resin. Examples of such plasticizers include dialkyl phtalates and adipates, epoxidized oil and fatty acid esters.

According to the present invention, the paint composition usually contains one or more fillers and/or pigments which are used not only as a cheap diluent but mostly for improving certain properties of the protective underbody coating and especially its internal cohesion. The filler is preferably used in an amount up to 70% by weight based of the total paint composition weight. The fillers which are used in the the compositions according to the present invention may be calcium carbonate, baryta, talc, mica, clay, kaolin, silicates, asbestos fibres, and the like. In a preferred embodiment of the present invention, calcium carbonate is used.

The present compositions are in the form of a soft, homogeneous paste, having an excellent aging resistance and storage stability and requiring no stirring before use. Such compositions may be applied by pulverisation on metallic surfaces which have been previously treated with a conventional primer of the type used in the automobile industry and particularly those conventionally used for the underbody areas. According to the present invention the film of protective coating formed after the pulverisation does not sag. Then the hardening of the film is carried out by drying in a furnace at a temperature of between 100° and 150°C for about 20 minutes. The protective film obtained according to these conditions shows excellent adhesion properties when the film is in the form of thin layers of 0.2-0.3 mm thickness as well as when the film is in the form of layers of about 1 mm.

Moreover, the film also has good abrasion resistance, measured according to the "Standard Test Method for Chipping Resistance of Coatings" test (ASTM-D3170-87). Additionally, the protective coatings obtained with the compositions of the present invention have good anti-corrosive properties when they are submitted to the salt spray test (DIN 50021) and to the humidity test (High-Humidity-Cabinet DIN 50017).

The present compositions may be applied either by air assisted spray systems according to which the atomisation of the product is carried out with air, or by an airless spray system according to which the atomisation of the product is carried out by passing the product, under high pressure, through nozzles having extremely fine orifices of elliptical or similar cross-section.

As a result of the fluidity of the present compositions, they may be applied under relatively low pressure, which considerably reduces the wear on the application apparatus.

The following examples are presented in order to illustrate the present invention but are not to be considered as limiting to such invention.

### Example 1

1.a.Preparation of the elastomer modified liquid aromatic epoxy resin :
   the following materials are introduced into the reactor :
      - 320g of Epikote 828: (liquid aromatic epoxide resin having an EGC comprised between 5260 and 5420 mmole/kg Epikote is a trademark of SHELL)
      - 128g of Pripol 1010: (dimer acid having an acid value comprised between 191 and 197 mg KOH/g - Pripol is a trademark of UNICHEMA)
      1g of triphenylphosphine
   the mixture is maintained during 2 hours at about 100°C. Then the mixture is cooled down and the resin is filtered. The resulting elastomer modified epoxy resin has an EGC of about 3000 mmole/kg.
1.b.Preparation of the paint :
   390g of Epikote 877 (liquid aliphatic diepoxide resin having an EGC comprised between 2940 and 3225 mmole/kg) are introduced in a reactor. 110g of Epikote 1055 (solid aromatic epoxide resin having an EGC comprised between 1130 and 1280 mmole/kg) are added in the reactor under stirring and the mixture is maintained for 30 minutes at a temperature of about 85°C. Then the mixture is cooled and transferred into a metallic container where the temperature is controlled so that it never exceeds 45°C. The following products are then added under stirring until a homogenous paste is obtained :
   - 100g of the elastomer: modified Epikote 828 (as prepared in example 1.a. hereabove)
   - 50g: of diisononylphtalate
   - 45g of Epikure 108FF: (accelerated dicyandiamide having a particle size distribution such that less than 0,5% of the particles have a size above 75 um - Epikure is a trademark of SHELL)
   - 20g of Epikure 143FF: (accelerated dicyandiamide having a particle size distribution such that less than 0,5% of the particles have a size above 75 um)

   The paste is cooled at room temperature. Then the following fillers and pigments are added under stirring :
   - 110g of Socal: (calcium carbonate with an average particle size of 0,02 um - Socal is a trademark of SOLVAY)
   - 300g of Millicarb: (calcium carbonate with an average particle size of 3 um - Millicarb is a trademark of OMYA)
   10g of iron oxide
   10g of titanium dioxide
   The stirring is maintained until a homogenous paste is obtained.
   15g of Aerosil 380 (amorphous silicon dioxide with an average particle size of 7 nm - Aerosil is a trademark of DEGUSSA) are added under stirring. The agitation is maintained during about 30 minutes. The paste is then deaerated under vacuum (1300 Pa) during 30 minutes.

In term of viscosity stability, the resulting paint shows an increase of viscosity lower than 10% after 30 days at 40°C.

After application of the paste on precoated panels, these panels are subjected to the following conditions:
curing at 125°C during 15min
cooling to room temperature
curing at 140°C during 15min
cooling to room temperature.

The panels are then submitted to different test methods as indicated hereafter. The stone ship resistance according to ASTM-D3170-87 stays excellent after an 8 hours test. After a salt spray test of 800 hours according to DIN 50021 no corrosion is observed. The paint shows no degradation after a 30 cycles humidity test according to DIN 50017. No crackings are detected after an impact test according to ASTM-D2794 with a charge of 200kg/cm in direct or reverse mode. There is no problem of recoatability with acrylic, alkyd or polyester sprayable coatings. Furthermore the adhesion on cataphoretic panels is perfect.

### Example 2

### Preparation of the paint :

The following diepoxide resins are introduced in a metallic container :
320g of Epikote 877
110g of Epikote 828
90g of Epikote 1055

The mixture is vigorously stirred until a homogenous paste is obtained. Then 40g of Epikure 3128 is added under stirring and at a temperature never exceeding 45°C. The paste is cooled at room temperature. Then the following fillers and pigments are added under stirring :
110g of Socal
300g of Millicarb
10g of iron oxide

The stirring is maintained until a homogenous paste is obtained. 10g of Aerosil 380 are added under stirring. The agitation is maintained during about 30 minutes. The paste is then deaerated under vacuum (1300 Pa) and during 30 minutes.

In term of viscosity stability, the resulting paint shows an increase of viscosity lower than 10% after 30 days at 40°C.
After application of the paste on precoated panels, these panels are subjected to the following conditions:
curing at 125°C during 15min
cooling to room temperature
curing at 140°C during 15min
cooling to room temperature.

The panels are then submitted to different test methods as indicated hereafter. The stone ship resistance according to ASTM-D3170-87 stays excellent after a 10 hours test. After a salt spray test of 800 hours according to DIN 50021 no corrosion is observed. The paint shows no degradation after a 30 cycles humidity test according to DIN 50017. No crackings are detected after an impact test according to ASTM-D2794 with a charge of 200kg/cm in direct or reverse mode. There is no problem of recoatability with acrylic, alkyd or polyester sprayable underbody coatings. Furthermore the adhesion on cataphoretic panels is perfect.

## Claims

1. Use of a sprayable coating composition for coating surfaces underneath automobiles, said composition comprising a solid hardener in the form of a powder, one or more fillers and/or pigments and one or more solventless diepoxide resins,
wherein the solid hardener essentially does not react with the diepoxide resins during storage of the paint at ambient temperature, and
wherein the one or more solventless diepoxide resins consist essentially of at least one liquid aliphatic diepoxide resin and comprise optionally :
(i) at least one dissolved or dispersed solid aromatic diepoxide resin and/or
(ii) at least one liquid aromatic diepoxide resin which may be elastomer-modified.

2. Use of a sprayable coating composition according to claim 1, wherein the solid hardener reacts with the diepoxide resin at a temperature comprised between 110°C and 160°C.

3. Use of a sprayable coating composition according to any one of the preceding claims wherein the solid hardener has a particle size distribution such that at least 90% of the particles have a size below 100 µm.

4. Use of a sprayable coating composition according to any one of the preceding claims, wherein the solid hardener is chosen among accelerated or substituted dicyandiamide type hardeners.

5. Use of a sprayable coating composition according to any one of the preceding claims wherein the liquid aliphatic diepoxide resin has an EGC comprised between 2800 and 3400 mmole/kg.

6. Use of a sprayable coating composition according to any one of the preceding claims wherein the solid aromatic diepoxide resin is present in an amount up to 50% by weight of the total diepoxide resin and has an EGC comprised between 800 and 1500 mmole/kg.

7. Use of a sprayable coating composition according to any one of the preceding claims wherein the liquid aromatic diepoxide resin is present in an amount up to 50% by weight of the total diepoxide resin and has an EGC comprised if non-modified between 5000 and 5900 mmole/kg or if modified between 2800 and 5800 mmole/kg.

8. Use of a sprayable coating composition according to any one of the preceding claims wherein the elastomer modifying resin is a carboxy terminated polybutadiene, a carboxy-terminated polyester resin, a carboxy-terminated acrylonitrile-butadiene copolymer or a fatty acid dimeric resin and is present in an amount up to 35% by weight of the elastomer-modified liquid aromatic diepoxide resin.

9. Use of a sprayable coating composition according to any one of the preceding claims wherein the paint further comprises a thixotropic agent in an amount comprised between 0.3 and 3% by weight of the paint.

10. Use of a sprayable coating composition according to claim 9 wherein the thixotropic agent is an amorphous silicon dioxide.

11. Use of a sprayable coating composition according to any one of the preceding claims wherein the paint further comprises up to 15% by weight of a plasticizer.

## Patentansprüche

1. Verwendung einer versprühbaren Beschichtungszusammensetzung zur Beschichtung von Flächen auf der Unterseite von Automobilen, wobei die Zusammensetzung einen festen Härter in Form eines Pulvers, einen oder mehrere Füllstoffe und/oder Pigmente und eines oder mehrere lösungsmittelfreie Diepoxidharze enthält,
wobei der feste Härter während der Lagerung der Farbe bei Umgebungstemperatur mit den Diepoxidharzen im wesentlichen nicht reagiert, und
wobei das eine oder die mehreren lösungsmittelfreien Diepoxidharze im wesentlichen aus mindestens einem flüssigen aliphatischen Diepoxidharz besteht (en) und gegebenenfalls umfaßt (ssen) :
(i) mindestens ein gelöstes oder dispergiertes festes aromatisches Diepoxidharz und/oder
(ii) mindestens ein flüssiges aromatisches Diepoxidharz, das Elastomer-modifiziert sein kann.

2. Verwendung einer versprühbaren Beschichtungszusammensetzung nach Anspruch 1, wobei der feste Härter bei einer Temperatur zwischen 110 °C und 160 °C mit dem Diepoxidharz reagiert.

3. Verwendung einer versprühbaren Beschichtungszusammensetzung nach einem der vorstehenden Ansprüche, wobei der feste Härter eine derartige Teilchengrößenverteilung aufweist, daß mindestens 90% der Teilchen eine Größe von weniger als 100 µm aufweisen.

4. Verwendung einer versprühbaren Beschichtungszusammensetzung nach einem der vorstehenden Ansprüche, wobei der feste Härter aus Härtern vom Typ eines beschleunigten oder substituierten Dicyandiamids ausgewählt wird.

5. Verwendung einer versprühbaren Beschichtungszusammensetzung nach einem der vorstehenden Ansprüche, wobei das flüssige aliphatische Diepoxidharz einen EGC zwischen 2.800 und 3.400 mMol/kg aufweist.

6. Verwendung einer versprühbaren Beschichtungszusammensetzung nach einem der vorstehenden Ansprüche, wobei das feste aromatische Diepoxidharz in einer Menge von bis zu 50 Gew.-% der Gesamtmenge des Diepoxidharzes vorliegt und einen EGC zwischen 800 und 1.500 mMol/kg aufweist.

7. Verwendung einer versprühbaren Beschichtungszusammensetzung nach einem der vorstehenden Ansprüche, wobei das flüssige aromatische Diepoxidharz in einer Menge von bis zu 50 Gew.-% der Gesamtmenge des Diepoxidharzes vorliegt und einen EGC zwischen 5.000 und 5.900 mMol/kg aufweist, wenn es nicht modifiziert ist, oder zwischen 2.800 und 5.800 mMol/kg aufweist, wenn es modifiziert ist.

8. Verwendung einer versprühbaren Beschichtungszusammensetzung nach einem der vorstehenden Ansprüche, wobei das Elastomermodifizierende Harz ein Carboxyendgruppenpolybutadien, ein Carboxyendgruppenpolyesterharz, ein Carboxyendgruppenacrylnitril-Butadien-Copolymer oder ein dimeres Fettsäureharz ist und in einer Menge von bis zu 35 Gew.-% des Elastomermodifizierten flüssigen aromatischen Diepoxidharzes vorliegt.

9. Verwendung einer versprühbaren Beschichtungszusammensetzung nach einem der vorstehenden Ansprüche, wobei die Farbe außerdem ein thixotropes Mittel in einer Menge zwischen 0,3 und 3 Gew.-% der Farbe umfaßt.

10. Verwendung einer versprühbaren Beschichtungszusammensetzung nach Anspruch 9, wobei das thixotrope Mittel ein amorphes Siliciumdioxid ist.

11. Verwendung einer versprühbaren Beschichtungszusammensetzung nach einem der vorstehenden Ansprüche, wobei die Farbe außerdem bis zu 15 Gew.-% eines Weichmachers enthält.

## Revendications

1. Utilisation d'une composition d'enduit pulvérisable pour enduire des surfaces sous des automobiles, ladite composition comprenant un durcisseur solide sous la forme d'une poudre, une ou plusieurs charges de remplissage et/ou pigments et une ou plusieurs résines diépoxy sans solvant,
dans laquelle le durcisseur solide ne réagit essentiellement pas avec les résines diépoxy durant le stockage de la peinture à la température ambiante, et
dans laquelle les une ou plusieurs résines diépoxy sans solvant consistent essentiellement en au moins une résine diépoxy aliphatique liquide et comprennent, éventuellement:
(i) au moins une résine diépoxy aromatique solide dissoute ou dispersée et/ou
(ii) au moins une résine diépoxy aromatique liquide qui peut être modifiée par un élastomère.

2. Utilisation d'une composition d'enduit pulvérisable conformément à la revendication 1, dans laquelle le durcisseur solide réagit avec la résine diépoxy à une température comprise entre 110°C et 160°C.

3. Utilisation d'une composition d'enduit pulvérisable conformément à l'une quelconque des revendications précédentes, dans laquelle le durcisseur solide a une distribution de la taille des particules telle que au moins 90% des particules ont une taille inférieure à 100 µm.

4. Utilisation d'une composition d'enduit pulvérisable conformément à l'une quelconque des revendications précédentes, dans laquelle le durcisseur solide est choisi parmi des durcisseurs de type dicyanodiamide accélérés ou substitués.

5. Utilisation d'une composition d'enduit pulvérisable conformément à l'une quelconque des revendications précédentes, dans laquelle la résine diépoxy aliphatique liquide a une teneur en groupements époxy comprise entre 2800 et 3400 mmoles/kg.

6. Utilisation d'une composition d'enduit pulvérisable conformément à l'une quelconque des revendications précédentes, dans laquelle la résine diépoxy aromatique solide est présente en une quantité allant jusqu'à 50 % en poids de la résine diépoxy totale et a une teneur en groupements époxy comprise entre 800 et 1500 mmoles/kg.

7. Utilisation d'une composition d'enduit pulvérisable conformément à l'une quelconque des revendications précédentes, dans laquelle la résine diépoxy aromatique liquide est présente en une quantité allant jusqu'à 50 % en poids de la résine diépoxy totale et a une teneur en groupements époxy comprise, si elle n'est pas modifiée, entre 5000 et 5900 mmoles/kg ou, si elle est modifiée, entre 2800 et 5800 mmoles/kg.

8. Utilisation d'une composition d'enduit pulvérisable conformément à l'une quelconque des revendications précédentes, dans laquelle l'élastomère modifiant la résine est un polybutadiène terminé par un carboxy, une résine polyester terminée par un carboxy, un copolymère acrylonitrile-butadiène terminé par un carboxy ou une résine de dimères d'acide(s) gras et est présent en une quantité allant jusqu'à 35% en poids de la résine diépoxy aromatique liquide modifiée par un élastomère.

9. Utilisation d'une composition d'enduit pulvérisable conformément à l'une quelconque des revendications précédentes, dans laquelle la peinture comprend en outre un agent thixotrope en une quantité comprise entre 0,3 et 3% en poids de la peinture.

10. Utilisation d'une composition d'enduit pulvérisable conformément à la revendication 9, dans laquelle l'agent thixotrope est un dioxyde de silicium amorphe.

11. Utilisation d'une composition d'enduit pulvérisable conformément à l'une quelconque des revendications précédentes, dans laquelle la peinture comprend en outre jusqu'à 15% en poids d'un plastifiant.
